# EUROPEAN PATENT APPLICATION

(11) **EP 4 613 344 A1**
(43) Date of publication of application: **10.09.2025**
(21) Application number: 25161889.8
(22) Date of filing: 05.03.2025
(51) Int. Cl.: A63F 13/212, A63F 13/42, A63F 13/235

(54) **BIOMETRIC-BASED VIDEO GAME CONTROL SYSTEM AND METHODS THEREOF**

(30) Priority: 08.03.2024 US 202463562746 P; 26.02.2025 US 202519063450
(71) Applicant: Children's Hospital Medical Center, Cincinnati, Ohio 45229-3029 (US)
(72) Inventor: Olbrecht, Vanessa, Chadds Ford, 19317 (US); King, Christopher D., Cincinnati, 45242 (US); Williams, Sara, Palo Alto, 94304 (US)
(74) Representative: Forresters IP LLP

(57) **Abstract**

Systems and methods for detecting biological characteristics of a wearer of a biometric sensor unit and converting the biological characteristics into simulated gaming control signals. These simulated control signals can correspond to any type of conventional gaming controller input. By providing video game control seeking to teach breathing control and heart rate lowering techniques, physiological stress indicators of the wearer can be reduced.

## Description

### CROSS REFERENCE TO RELATED APPLICATIONS

This application claims the benefit of US Ser. No. 63/562,746, entitled "BIOMETRIC-BASED VIDEO GAME CONTROL SYSTEM AND METHODS", filed on March 8, 2024, the disclosure of which is incorporated herein by reference in its entirety.

### BACKGROUND

Pain management is an important health issue, especially for children. It is known in the medical field that the perception of pain can be altered by changing physiological parameters like respiration rate and heart rate. Slow, controlled breathing has been shown to stimulate the parasympathetic nervous system which can reduce feelings of pain and anxiety. Additionally, slowing one's heart rate through relaxation techniques lowers blood pressure and lessens the pain signals being sent to the brain. Teaching children methods to control their breathing and heart rate equips them with skills to self-manage pain, both acute pain such as that associated with medical procedures like injections, as well as pain from various chronic conditions.

### BRIEF DESCRIPTION OF THE DRAWINGS

It is believed that certain embodiments will be better understood from the following description taken in conjunction with the accompanying drawings in which:
FIGS. 1-3 depict example biometric sensor units in communication with gaming systems, in accordance with various embodiments;
FIG. 4 schematically depicts an example biometric sensor unit, in accordance with one embodiment;
FIGS. 5A-5B schematically depict the operation of an example strain gauge of a biometric sensor unit, in accordance with one embodiment;
FIGS. 6A-6B are photographs of an example biometric sensor unit, with FIG. 6B showing the housing opened for clarity in accordance with one embodiment;
FIGS. 7-8 illustrate example conversions of a user's real-time breathing to simulated joystick data, in accordance with an embodiment;
FIGS. 9A-9B schematically depict the controlling of a video game using sensed biometrics, in accordance with an embodiment; and
FIG. 10 is a flow chart for a method of controlling aspects of a video game using signals received from a biometric sensor, in accordance with an embodiment.

### DETAILED DESCRIPTION

Various non-limiting embodiments of the present disclosure will now be described to provide an overall understanding of the principles of the structure, function, and use of the systems and methods as disclosed herein. One or more examples of these non-limiting embodiments are illustrated in the accompanying drawings. Those of ordinary skill in the art will understand that systems and methods specifically described herein and illustrated in the accompanying drawings are non-limiting embodiments. The features illustrated or described in connection with one non-limiting embodiment may be combined with the features of other non-limiting embodiments. Such modifications and variations are intended to be included within the scope of the present disclosure.

Reference throughout the specification to "various embodiments," "some embodiments," "one embodiment," "some example embodiments," "one example embodiment," or "an embodiment" means that a particular feature, structure, or characteristic described in connection with any embodiment is included in at least one embodiment. Thus, appearances of the phrases "in various embodiments," "in some embodiments," "in one embodiment," "some example embodiments," "one example embodiment, " or "in an embodiment" in places throughout the specification are not necessarily all referring to the same embodiment. Furthermore, the particular features, structures or characteristics may be combined in any suitable manner in one or more embodiments.

Throughout this disclosure, references to components or modules generally refer to items that logically can be grouped together to perform a function or group of related functions. Components and modules can be implemented in software, hardware, or a combination of software and hardware. The term software is used expansively to include not only executable code, but also data structures, data stores, and computing instructions in any electronic format, firmware, and embedded software. The terms information and data are used expansively and can include a wide variety of electronic information, including but not limited to machine-executable or machine-interpretable instructions; content such as text, video data, and audio data, among others; and various codes or flags. The terms information, data, and content are sometimes used interchangeably when permitted by context.

The examples discussed herein are examples only and are provided to assist in the explanation of the systems and methods described herein. None of the features or components shown in the drawings or discussed below should be taken as mandatory for any specific implementation of any of these systems and methods unless specifically designated as mandatory. For ease of reading and clarity, certain components, modules, or methods may be described solely in connection with a specific figure. Any failure to specifically describe a combination or sub-combination of components should not be understood as an indication that any combination or sub-combination is not possible. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Controlling physiological factors, such as respiration and heart rate, has been demonstrated to reduce pain perception, with children especially in need of suitable methods and tools to learn these skills. Embodiments of the present disclosure can assist in teaching children to manage pain by controlling their breathing and/or heart rate and to address this need in an engaging, effective way adapted for young users. In accordance with various embodiments, the systems and methods can reduce physiological stress indicators by providing video game control seeking to teach breathing control and heart rate lowering techniques using a real-time feedback-based approach. While many examples described herein are in the context of assisting children with pain relief techniques, it is to be appreciated that this disclosure is not so limited, as the technology described herein is applicable across a variety of use cases in which video game control is provided through the conversion of biological characteristics of a user to simulated gaming control signals.

In accordance with the present disclosure, aspects of a video game can be controlled via a user's real time biological characteristics, such as breathing characteristics and/or heart rate characteristics. As described below, such biological characteristics can be detected by a wearable biometric sensor unit and converted into simulated gaming control signals. These simulated control signals can correspond to any type of conventional gaming controller input. Examples of joystick movements that can be simulated include, but are not limited to, gamepad directional inputs, joystick directional inputs, virtual reality (VR) handset controller movements and inputs, touchpad gestures, button presses, trigger activations, or other control commands typically provided by gaming input devices.

Accordingly, the wearable biometric sensor can be configured to mimic the signals typically generated by a gaming controller. The simulated gaming control signals can be provided as an input to a gaming system that is executing video game software, and real-time aspects of the video game can be controlled based on the simulated gaming control signals.

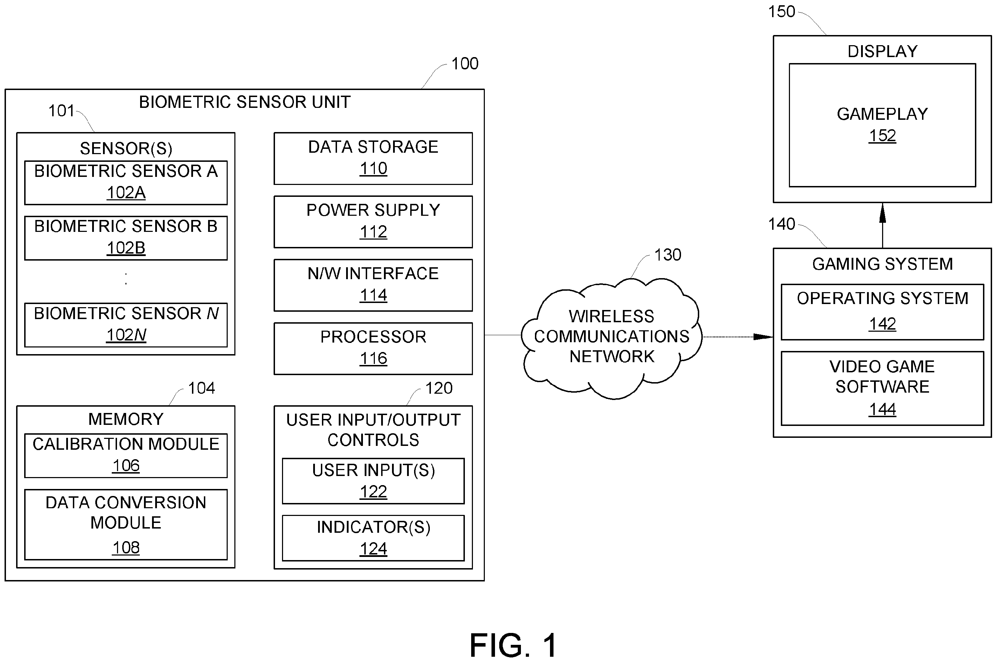

Referring now to FIG. 1, an example biometric sensor unit 100 in communication with a gaming system 140 via a wireless communications network 130 is depicted. The gaming system 140 can be any suitable gaming console, such as an Xbox^{®}, Nintendo^{®}, or PlayStation^{®}, that conventionally pairs wirelessly to a handheld controller to receive input commands during gameplay. For some gaming consoles, the wireless communications network 130 is a Bluetooth^{®} wireless network. As is typical for gaming consoles, the gaming system 140 can include internal processors and memory for executing an operating system 142, as well as networking firmware device drivers and locally provisioned or downloaded video game software 144. The video game software 144 executes on the gaming system 140 processors to provide an interactive gaming experience, as can be presented as gameplay 152 on a display 150.

In accordance with the present disclosure, the biometric sensor unit 100 can provide input to the video game software 144 allowing for the gameplay 152 on the gaming system 140 to be controlled via a user's real-time biological characteristics. The biometric sensor unit 100 can be a wearable system that is configured to be coupled to a user during gameplay through a suitable attachment structure. The attachment structure can include, but is not limited to, elastic straps, adhesive patches, form-fitting garments, clips, bands, hook-and-loop fasteners, or other suitable mounting approaches. In some embodiments, the biometric sensor unit 100 can be mounted to a user's torso using an attachment structure that include a strap that extends around the torso, but this disclosure is not so limited. In other embodiments, the biometric sensor unit 100 may be integrated into clothing, accessories, or directly secured to various body locations including a user's arm, head, wrist, or other suitable location depending on the biological characteristic being measured, for example. The specific configuration of the attachment structure can be selected based on sensor type, measurement requirements, user comfort, and intended use during gameplay.

The real-time biological characteristics, as detected by the biometric sensor unit 100, can be converted to gaming control signals and wirelessly provided to the gaming system 140. By way of example, in some embodiments, a user's breathing rate can be used to control the gameplay 152. In some embodiments, a user's heart rate can be used to control the gameplay 152. In some embodiments, a combination of a user's heart rate and their breathing rate can be used to control the gameplay 152. In some embodiments, a user's heart rate can be used to control a first aspect of the gameplay 152, and a user's breathing rate can be used to control a second aspect of the gameplay 152. Further, it is to be appreciated, that any other biological characteristics that can be sensed by the biometric sensor unit 100 can be converted to a suitable real-time input to the video game software 144, such as muscle tension, blood pressure, and so forth.

The biometric sensor unit 100 can include various modules in memory 104, which are schematically shown as a calibration module 106 and a data conversion module 108. The biometric sensor unit 100 can also include various input/output controls 120, such as user inputs 122 and one or more visual, auditory, or haptic indicators 124. In some embodiments, execution of the calibration module 106 can allow for the calibration of one or more sensors 101 for a particular user that is wearing the biometric sensor unit 100. While the type of calibration process can vary based on the type of sensors 101 being calibrated, in one embodiment an onboard strain gauge of the biometric sensor unit 100 used to measure a user's breathing can be calibrated. Due to each user being a different size, the biometric sensor unit 100 can be worn in slightly different positions and at different tightness of a mounting strap or other type of attachment structure, for example. Calibration of the sensor(s) 101 can be performed at the beginning of each use to ensure accurate gameplay control. In some embodiments, this sensor calibration process takes the value of the strain gauge at the smallest chest volume (bottom of exhale) when a first of the input controls 120 is pressed. Input control can be identified as "minimum" on the housing of the biometric sensor unit 100, or otherwise color coded, although this disclosure is not so limited. The top of the inhale, or largest chest volume measured value, can be collected when a second of the of the input controls 120 is pressed. Such input control can be identified, for example, as "maximum." The minimum and maximum values measured by the strain gauge of the biometric sensor unit 100 during the calibration process can be collected and stored on an SD card for data analysis, which allows the respiratory reading to be graphed within the min/max calibration, for example. The calibration points also allow the data conversion module 108 of the biometric sensor unit 100 to map, or otherwise extrapolate, the measured respiratory range to the non-changing range of the joystick input used to control the gameplay 152.

By way of one embodiment, the gameplay 152 can be controlled by a user's respiration as measured by a strain gauge. More particularly, the change in measured value of the strain gauge as a user breathes can be correlated to a joystick's movement on a conventional gamepad controller. The minimum and maximum calibration data, as collected by the calibration module 106, can be used to set the range. For instance, for illustration purposes, the calibrated range may be 0 to 100, with 0 being the minimum strain gauge value and 100 being the maximum strain gauge value. As such, the real-time reading from the strain gauge will be within that range. In accordance with various gamepad communication protocols, the joystick will have a minimum/maximum range but will be centered on zero and with higher resolution (i.e., -32,737 to 32,737). Thus, each time the device is calibrated, the minimum and maximum of the respiratory readings are mapped or otherwise correlated to the minimum/maximum of the joystick movements. The respiratory readings that are measured during use are then spread evenly between the joystick minimum/maximum. This approach allows for large or small inputs from the strain gauge sensor, or other type of sensor, to be evenly matched to the range of the joystick movement. Accordingly, in accordance with the present disclosure, the breathing movement, which has a relatively smaller value/range, can be scaled up by the data conversion module 108 to the larger range the joystick can move. The movement of the simulated joystick from up to down can advance the user's position or otherwise control the gameplay 152 in real-time.

The biometric sensor unit 100 can include various other components, such as data storage 110, a power supply 112, a network interface 114, and one or more processors 116. In some embodiments, the data storage 110 includes the removable SD card and associated hardware that is configured to collect and store various data that is usable for data analysis. For example, the SD card storage, or other type of storage system, can be used to collect a data record of the time, date, maximum respiration calibration value, minimum respiration calibration value, real time respiration value (i.e., based on a strain gauge reading), and real time heart rate value. A real-time clock board can be utilized that time stamps the data that is saved to the SD card. In some embodiments, the respiration and heart rate values can be sinusoidal and collected simultaneously at 10 times a second, allowing the data to be analyzed in many different ways.

As schematically illustrated in FIG. 1, the biometric sensor unit 100 can include one or more sensors 101. The sensors 101 can include biometric sensors 102A-N, which can each be configured to generate signals responsive to various biological characteristics. In this regard, each of the biometric sensors 102A-N can be any of a variety of different types of devices, such as a strain gauge, a cardiovascular monitoring device, a thermometer, an electroencephalogram, among others.

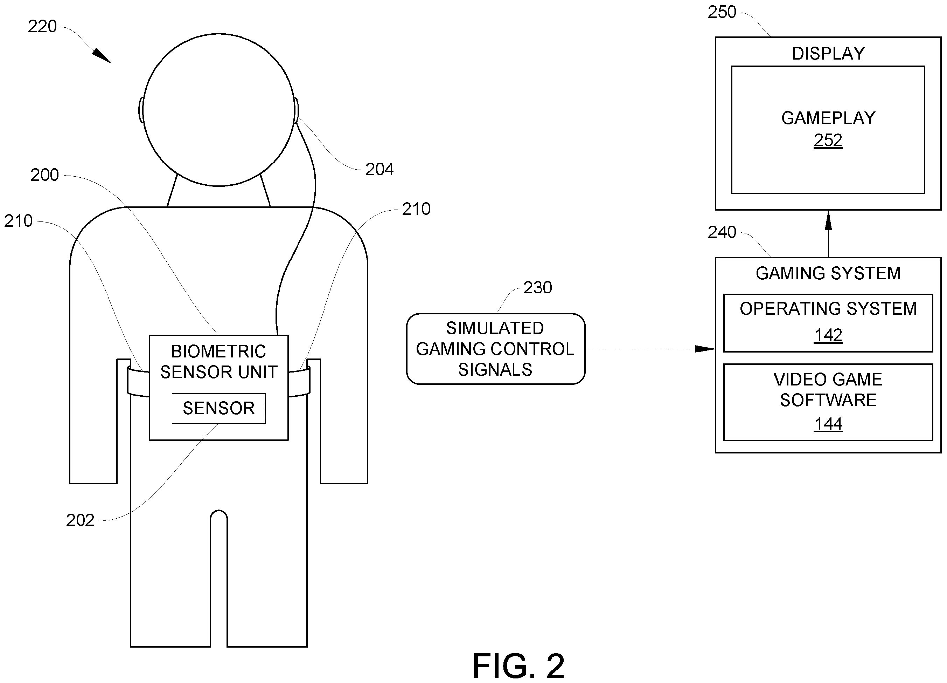

Referring now to FIG. 2, an example biometric sensor unit 200 having a sensor 202 is schematically shown coupled to a user 220 using a flexible strap 210. While a strap 210 is shown in FIG. 2 for illustration purposes, any suitable attachment structure can be utilized without departing from the scope of the present disclosure. In this embodiment, the biometric sensor unit 200 also includes a tethered pulse sensor 204, which is shown clipped to an earlobe of the user 220. The sensor 202 can be, for example, a strain gauge that can be used to generate signals responsive to the breathing of the user 220. As provided above, a calibration process can be used to correlate the signals generated by the sensor 202 to simulated gaming control signals 230 that can be wirelessly transmitted to a gaming system 240. In some embodiments, the simulated gaming control signals 230 are correlated to joystick movements, although this disclosure is not so limited. The gaming system 240 can include an operating system 242 and video game software 244. Gameplay 252 can be presented on a display 250, with the biometric characteristics of the user 220, as collected by the biometric sensor unit 200, controlling the gameplay 252. While the type of gameplay 252 can vary, in some embodiments, the video game software 244 is configured such that specific types of joystick movements (as correlated to specific breathing characteristics) result in certain gaming control. By way of example, slow and deep breaths by the user 220 may result in favorable gameplay 252, while quick and shallow breaths may not impact the gameplay 252 or may negatively impact the gameplay 252. As such, the user 220 can be rewarded with favorable gameplay 252 by adjusting their breathing patterns.

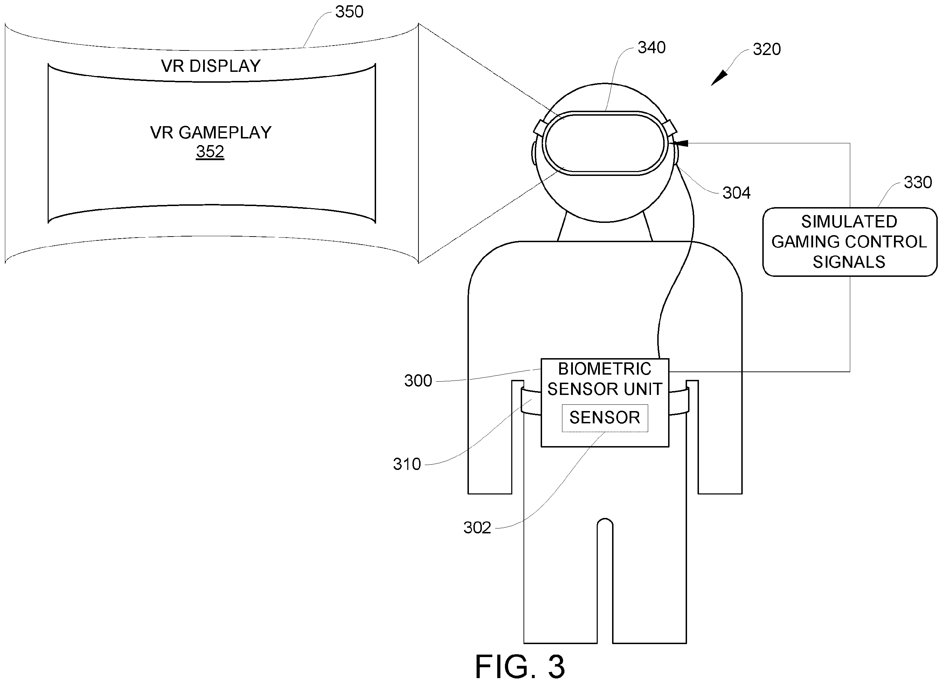

In some embodiments, virtual reality-based gameplay can be controlled by the biological characteristics of a user. As shown in FIG. 3, an example biometric sensor unit 300 having a sensor 302 is coupled to a user 320 using an attachment structure, shown as a flexible strap 310. In this embodiment, the biometric sensor unit 300 includes a tethered pulse sensor 304, which is shown clipped to an earlobe of the user 320. Similar to previous embodiments, the sensor 302 can be, for example, a strain gauge that can be used to generate signals responsive to the breathing of user 320. A calibration process can be used to correlate the signals generated by the sensor 302 to simulate gaming control signals 330 that can be wirelessly transmitted to a gaming system 340. In this embodiment, the gaming system 340 is shown as a virtual reality game system that can be worn by the user 320. The simulated gaming control signals 330 can be correlated to joystick movements, or other movements of a conventional handheld controller operated by a user of a virtual reality gaming system. Immersive gameplay 352 can be presented on a virtual realty display 350, with the biometric characteristics of the user 320, as collected by the biometric sensor unit 300, controlling the gameplay 352. While the type of gameplay 352 can vary, in some embodiments, slow and deep breaths by the user 320 may result in the user virtually advancing through the virtual reality environment, collecting points, or otherwise being rewarded. As is to be appreciated, depending on the sensors of the biometric sensor unit 300, a wide variety of gameplay 352 aspects can be controlled. For example, a heart rate of the user 320 may control a first aspect of the gameplay 352, while breath rate controls a second aspect. In some embodiments, various real-time biological characteristics can be displayed to the user 320, while not necessarily controlling or impacting the gameplay 352. For example, the pulse of the user 320, as measured by the tethered pulse sensor 304, can be visually presented to the user 320 via the virtual reality display 350.

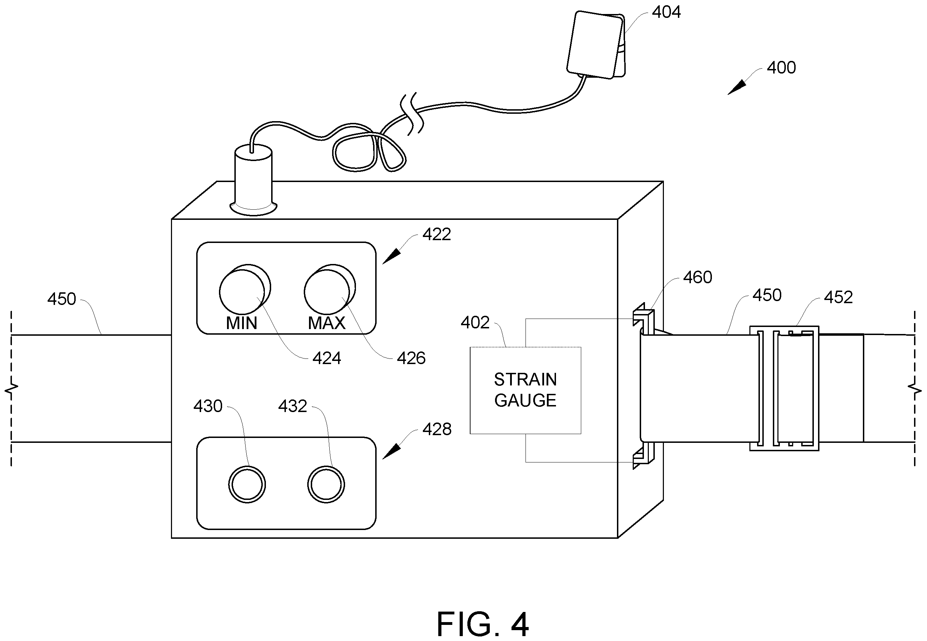

FIG. 4 schematically depicts an example biometric sensor unit 400, in accordance with one embodiment. The biometric sensor unit 400 can include, for example, user inputs 422, which are shown as a "MIN" button 424 and a "MAX" button 426 for illustration purposes only. The user inputs 422 can be utilized during a sensor calibration process, examples of which are provided above. The biometric sensor unit 400 can also include output indicators 428, which are schematically shown as a visual indicators 430 and 432. In accordance with one embodiment, the visual indicator 430 can be illuminated when a certain biological characteristic is measured and the visual indicator 432 can be illuminated when a different biological characteristic is measured. For example, the visual indicator 430 can be illuminated when a user fully inhales and the visual indicator 432 can be illuminated when a user fully exhales. The illustrated biometric sensor unit 400 also includes a tethered pulse oximeter 404, which can be coupled to an earlobe of a user, for example. While the tethered pulse oximeter 404 is shown for illustration purposes, other embodiments can utilize other types of physiological monitoring devices. Biometric sensor units in accordance with the present disclosure can include, for example, one or more cardiovascular monitoring devices, such as pulse oximeters, photoplethysmographic (PPG) sensors, electrocardiogram (ECG) sensors, impedance cardiography (ICG) devices, or other suitable devices for measuring heart rate and heart rate variability.

The biometric sensor unit 400 shown in FIG. 4 can be secured to a user via a strap 450, for example, which can be coupled to each side of the biometric sensor unit 400 at a strap mount or other suitable fixation point. An example strap mount 460 is shown in FIG. 4. The strap 450 can include at least one adjustment feature 452, such as a buckle, hook and loop fasteners, or the like, which allows the biometric sensor unit 400 to be tightly secured to the user. In the illustrated embodiment, a strain gauge 402 is positioned internal to the biometric sensor unit 400 and is coupled to the strap mount 460. Accordingly, as the force on the strap 450 increases, such as when the user inhales and the circumference of their torso enlarges, the strap 450 can pull on the strap mount 460. In turn, the strap mount 460 can apply force to the strain gauge 402, which generates a signal correlated to the increase in force. Therefore, as the user breathes, the strain gauge 402 can generate a generally sinusoidal wave indicative of the user's breathing pattern, with the magnitude of the wave controlled by the depth of inhale and exhale.

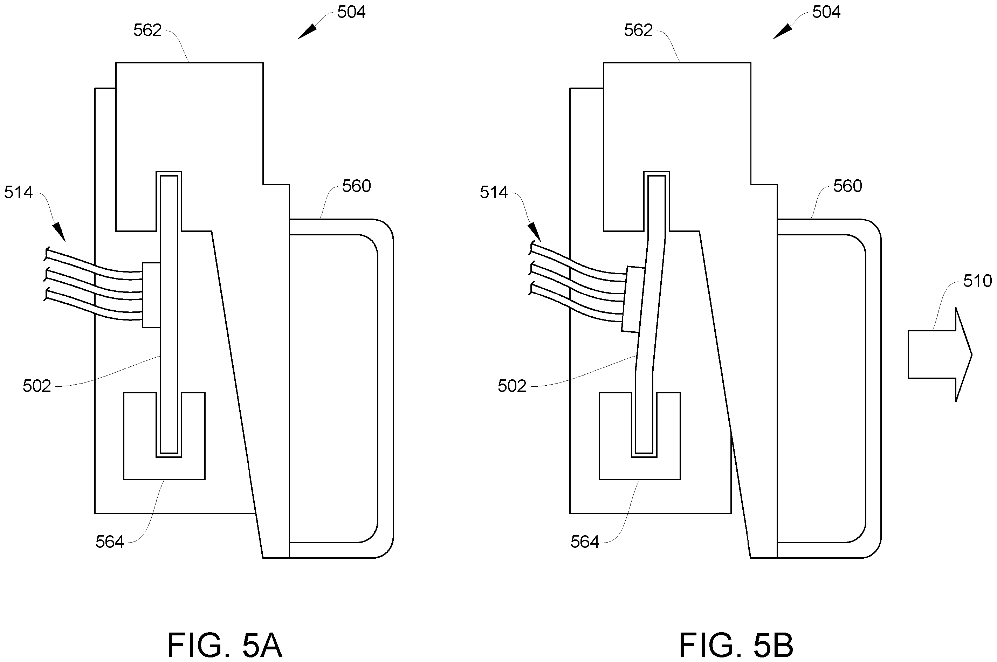

FIGS. 5A-5B schematically depict an example strain gauge assembly 504 of a biometric sensor unit, in accordance with one embodiment. The strain gauge assembly 504 can include a strain gauge 502, sometimes referred to as a load cell, which provides analog signals to a processor of the biometric sensor unit via conductors 514. In one embodiment, the strain gauge is a 10kg, straight bar type sensor, although this disclosure is not so limited. A first end of the strain gauge 502 can be coupled to a rigid mounting block 564. A second end of the strain gauge 502 can be coupled to a translating block 562 that is coupled to a strap mount 560. When a force is applied to the strap mount 560, as indicated by arrow 510, the translating block 562 can move relative to the rigid mounting block 564. As shown in FIG. 5B, the movement of the translating block 562 applies force to the strain gauge 502, which will change its electrical resistance, thereby allowing the force to be measured.

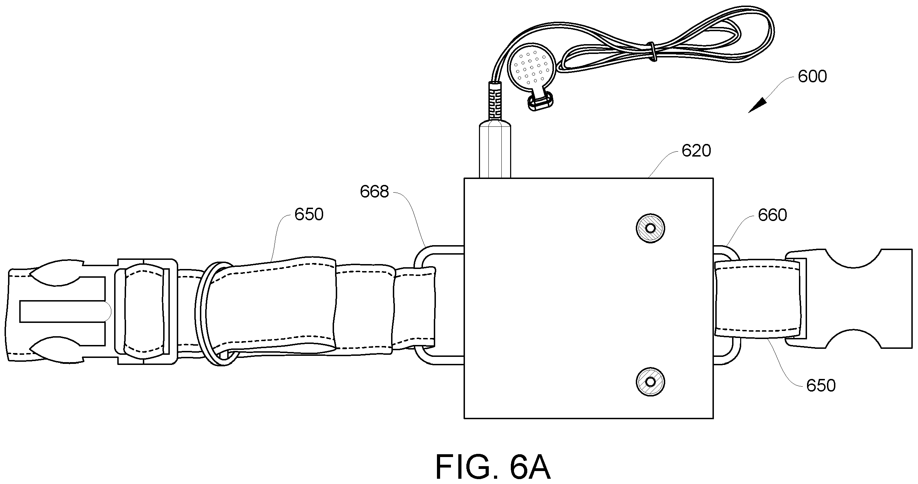

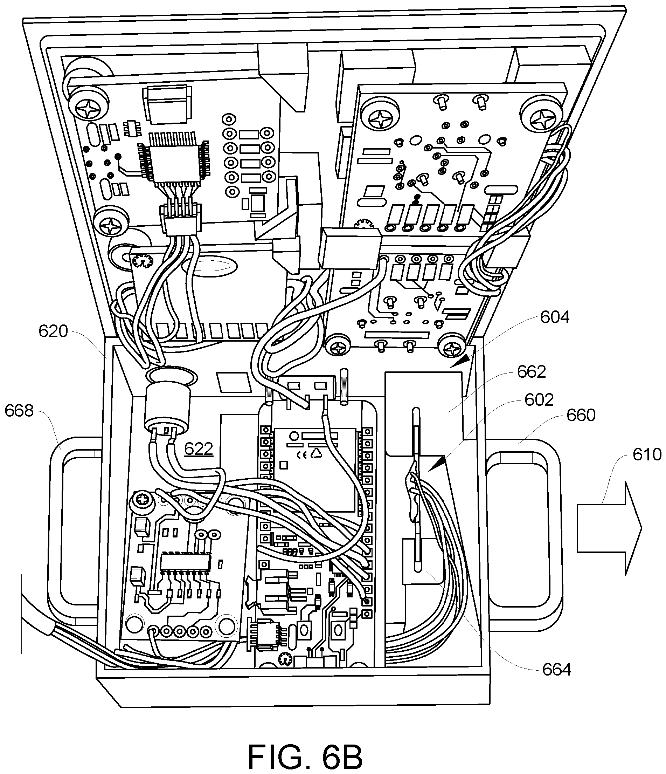

FIGS. 6A-6B are photographs of an example biometric sensor unit, with FIG. 6B showing the housing opened for clarity in accordance with one embodiment. The biometric sensor unit 600 can have a housing 620 defining an internal cavity 622 (FIG. 6B). The biometric sensor unit 600 can have a first strap mount 668 and a second strap mount 660 to which each respective end of a strap 650 (FIG. 6A) can be attached. As shown in FIG. 6B, the biometric sensor unit 600 also includes a strain gauge assembly 604. Similar to FIG. 5, the strain gauge assembly 604 includes a strain gauge 602 that is coupled to a rigid mounting block 664 and a translating mounting block 662. The second strap mount 660 is coupled to the translating mounting block 662, such that when the strap 650 applies force to the second strap mount 660 in the direction indicated by arrow 610, the strain gauge 602 can generate a signal proportional to the force.

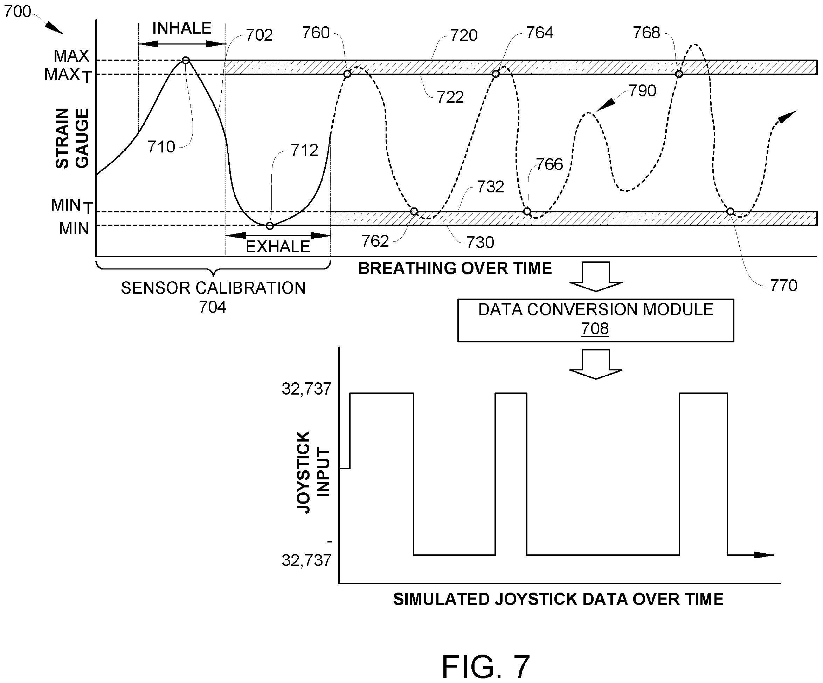

FIGS. 7-8 illustrate example conversions of a user's real-time breathing to simulated joystick data, in accordance with an embodiment. Referring first to plot 700, a signal wave 702 can be generated by a strain gauge of a biometric sensor unit that is coupled to a user. The signal wave 702 can be responsive to the force applied to the strain gauge during respiration. At sensor calibration 704, the user can provide a first input 710 to indicate that they have fully inhaled, and a second input 712 can be provided to indicate they have fully exhaled. Such inputs can be provided by depressing buttons on the biometric sensor unit, or other suitable technique. Based on calibration points, a maximum force level (shown as MAX level 720) and a minimum force level (shown as MIN level 730) can be established for the user, as measured by the strain gauge at those points. In some embodiments, a calibration buffer can be used to account for some natural variation to a user's breathing and reduce the likelihood of erratic video game control. Namely, a maximum threshold force level (shown as MAX_{T} level 722) can be calculated to be 90% of the maximum force level and a minimum threshold force level (shown as MIN_{T} level 732) can be calculated to be 90% of the minimum force level. While the illustrated embodiment utilizes a 10% buffer range, it is to be appreciated that any suitable buffer range - or no buffer at all - can be utilized in various implementations.

Once the MAX level 720 and the MIN level 730 are known and the MAX_{T} level 722 and MIN_{T} level 732 have been calculated, a data conversion module 708 can determine the appropriate correlation to map the real-time strain gauge reading to a corresponding joystick control data. The video game software being controlled by simulated joystick data can be configured such that certain joystick movements result in the control of certain aspects of the gameplay.

As shown in FIG. 7, once the signal wave 702 crosses the MAX_{T} level 722 at crossover point 760, the data conversion module 708 can generate a "joystick up" command by providing a value of 32,737 to an associated gaming system. Subsequently, once the signal wave 702 crosses the MIN_{T} level 732 at crossover point 762, the data conversion module 708 can generate a "joystick down" command by providing a value of -32,737 to an associated gaming system. While "joystick up" and "joystick down" commands are illustrated in FIG. 7, it is to be appreciated that the data conversion module 708 can convert the information received from the strain gauge, or any other sensor, to any type of gaming control signals that are interpretable by a video game, such as joystick right/left, joystick press, various other button presses, and so forth.

In any event, this process can continue as the user interacts with the associated video game, with the data conversion module 708 generating a "joystick up" when the signal wave 702 crosses the MAX_{T} level 722 at crossover point 764 and a "joystick down" command when the signal wave 702 crosses the MIN_{T} level 732 at crossover point 766. If the user's respiration does not cross either the MAX_{T} level 722 or the MIN_{T} level 732, as indicated at 790, the data conversion module 708 will not register the breaths which can impact gameplay for the user. Once the user resumes deep breaths, however, the data conversion module 708 can again generate a "joystick up" when the signal wave 702 crosses the MAX_{T} level 722 at crossover point 768 and a "joystick down" command when the signal wave 702 crosses the MIN_{T} level 732 at crossover point 770.

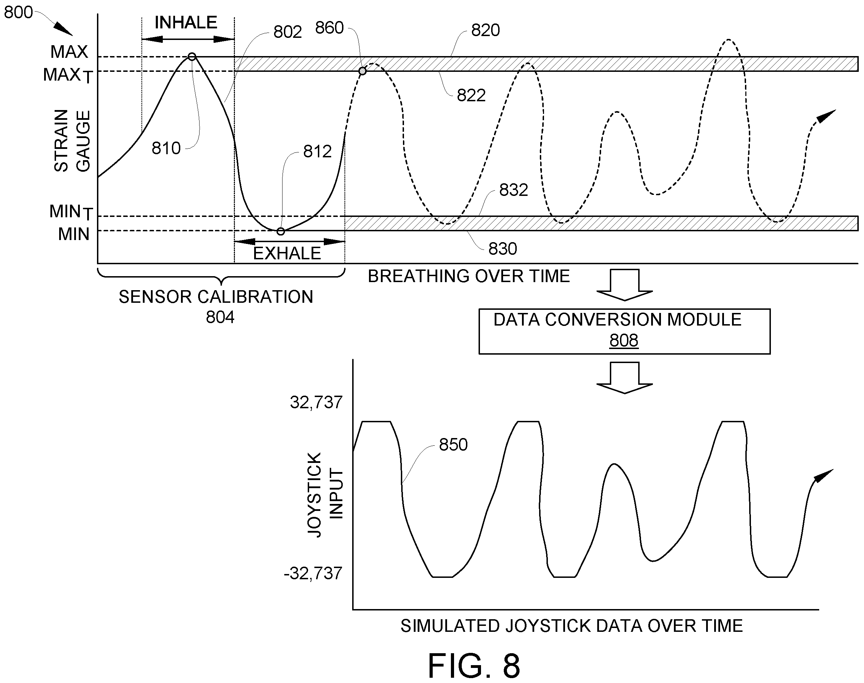

While FIG. 7 depicts one example approach for simulated joystick movement, namely binary control of the joystick as it toggles between a fully-up position and a fully-down position based on the user's breathing, this disclosure is not so limited. Referring now to FIG. 8, an example embodiment is depicted that generates simulated joystick data on a continuum between 32,737 and -32,737. Similar to FIG. 7, a plot 800 depicts a signal wave 802 that can be generated by a strain gauge of a biometric sensor unit that is coupled to a user, with the signal wave 802 being responsive to the force applied to the strain gauge during respiration. At sensor calibration 804, the user can provide a first input 810 to indicate that they have fully inhaled, and a second input 812 can be provided to indicate they have fully exhaled. Based on calibration points representing the maximum force level (shown as MAX level 820) and the minimum force level (shown as MIN level 830) can be established for the user, as measured by the strain gauge at those points. Additionally, calibration buffers can be used to account for some natural variation to a user's breathing, shown as MAX_{T} level 822 and MIN_{T} level 832.

Once the MAX level 820 and the MIN level 830 are known and the MAX_{T} level 822 and MIN_{T} level 832 have been calculated, a data conversion module 808 can determine the appropriate correlation to map the real-time strain gauge reading to a corresponding joystick control across the entire joystick command range. As shown in FIG. 8, once the signal wave 802 crosses the MAX_{T} level 822 at crossover point 860, the data conversion module 808 can generate and provide a joystick input value of 32,737. Subsequently, once the value of the signal wave 802 decreases during an exhale, the data conversion module 808 can decrease the value of the joystick input until the signal wave 802 ultimately crosses MIN_{T} level 832. Once that threshold level is crossed, the data conversion module 808 can generate and provide a joystick input value of - 32,737. That value can be maintained until the signal wave 802 crosses out of the buffer zone. This process can continue, with the data conversion module 808 generating a continuum of joystick input values, as the signal wave 802 fluctuates with the user's breathing.

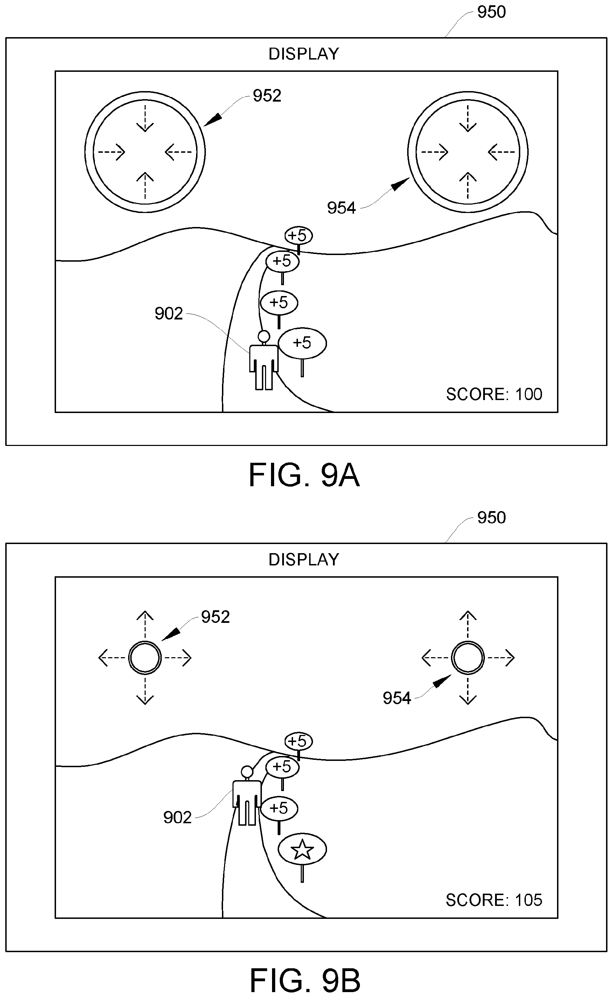

FIGS. 9A-9B schematically depict the controlling of a video game using sensed biometrics, in accordance with an embodiment. A display 950 can display the video game to a user wearing a biometric sensor unit. The display 950 can be associated with any suitable gaming device, such as a gaming console, a handheld gaming device, a mobile gaming device, a virtual reality-based gaming device, among others. In the illustrated embodiment, the biometric characteristics of the user control an avatar 902 in the video game in real-time (i.e., without lag). For instance, if the breathing pattern of the user is within a target range, the avatar 902 will advance forward to gather points, as shown in FIG. 9B. In some embodiments, the deeper and/or slower the user breaths, the further the avatar is advanced, thereby seeking to incentive the slow and controlled breathing by the player.

FIGS. 9A-9B also show an example feedback graphic 952 that can be presented on the display 950. As is to be appreciated, the type of feedback graphics presented to the user can vary greatly between implementations. The feedback graphic 952 can visually change in real-time responsive to the biometric characteristic of the user. By way of example, the feedback graphic 952 can be a ring that shrinks in size when the user exhales and increases in size when the user inhales.

Additionally or alternatively, a target feedback graphic 954 may be provided on the display 950 that graphically depicts a target biometric characteristic. For instance, the target feedback graphic 954 may be an animated visual cue that fluctuates in appearance based on a target breathing rate. In this fashion, a user can attempt to match their breathing rate, as reflected by the feedback graphic 952 representing their breathing rate, with the target breathing rate, as provided by the animated target feedback graphic 954. The appearance characteristics of the target feedback graphic 954 can be specifically selected to achieve desired physiological effects on the user. For example, the target feedback graphic 954 can be configured to guide the user to breathe at specific rates to improve heart rate variability. The visual characteristics of the target feedback graphic 954, including its shape, color, motion pattern, and timing, can be optimized to effectively guide the user toward achieving desired physiological states while maintaining user engagement.

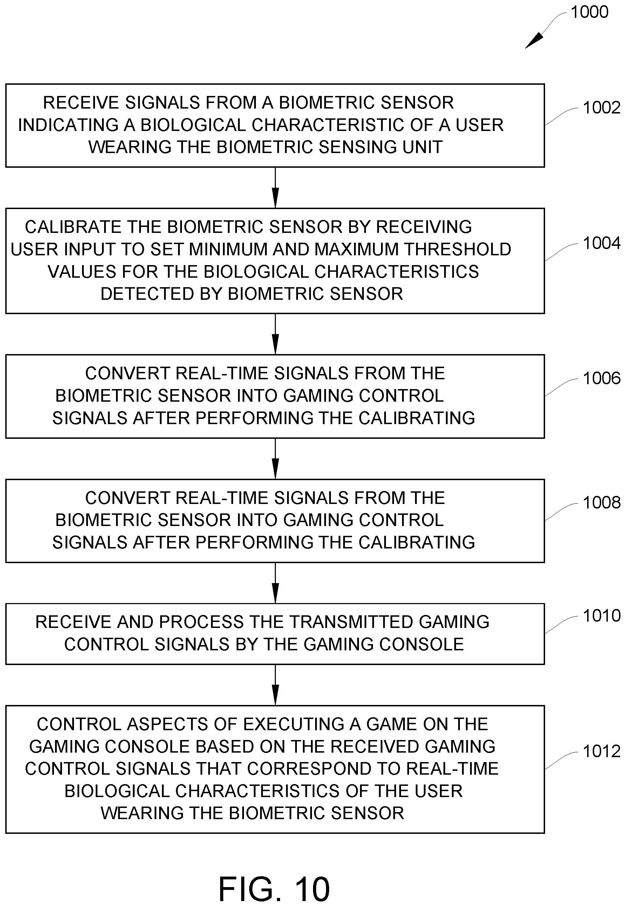

FIG. 10 is a flow chart for a method 1000 of controlling aspects of a video game using signals received from a biometric sensor, in accordance with an embodiment. At 1002, signals are received from a biometric sensor indicating a biological characteristic of a user wearing a biometric sensing unit. At 1004, the biometric sensor can be calibrated by receiving user input to set minimum and maximum threshold values for the biological characteristics detected by biometric sensor. As is to be appreciated, the type of calibration to be performed, if any, will vary based on the type of biometric sensor and the biological characteristic that is being measured. At 1006, subsequent to the calibration, the real-time signals received from the biometric sensor can be converted into gaming control signals. At 1008, the gaming control signals can be wirelessly transmitted to a gaming console. At 1010, the transmitted gaming control signals can be received and processed by the gaming console. At 1012, aspects of executing a game on the gaming console are controlled based on the received gaming control signals that correspond to real-time biological characteristics of the user wearing the biometric sensor.

The wearable biometric sensor unit and methods may comprise, consist of, or consist essentially of the elements of the wearable biometric sensor unit and/or methods as described herein, as well as any additional or optional element described herein or otherwise useful in the manufacture or use of a wearable biometric sensor unit or the use of methods for reducing physiological stress indicators of a user of a gaming device. The methods as described herein may be computer-implemented methods.

The foregoing description of embodiments and examples of the disclosure has been presented for purposes of illustration and description. It is not intended to be exhaustive or to limit the disclosure to the forms described. Numerous modifications are possible in light of the above teachings. Some of those modifications have been discussed and others will be understood by those skilled in the art. The embodiments were chosen and described in order to best illustrate the principles of the disclosure and various embodiments as are suited to the particular use contemplated. In some embodiments, the drawings can be understood to be drawn to scale. The scope of the disclosure is, of course, not limited to the examples or embodiments set forth herein, but can be employed in any number of applications and equivalent devices by those of ordinary skill in the art. Also, for any methods claimed and/or described, regardless of whether the method is described in conjunction with a flow diagram, it should be understood that unless otherwise specified or required by context, any explicit or implicit ordering of steps performed in the execution of a method does not imply that those steps must be performed in the order presented and may be performed in a different order or in parallel.

## Claims

1. A method for reducing physiological stress indicators of a user of a gaming device, the method comprising:
receiving, by a biometric sensor unit, signals from a biometric sensor indicating a biological characteristic of a user wearing the biometric sensor unit;
calibrating, by the biometric sensor unit, the biometric sensor by receiving user input to set minimum and maximum threshold values for the biological characteristic detected by the biometric sensor;
subsequent to the calibrating of the biometric sensor, converting, by the biometric sensor unit, the signals from the biometric sensor into gaming control signals corresponding to the biological characteristic of the user wearing the biometric sensor unit; and
wirelessly transmitting, by the biometric sensor unit, the gaming control signals to a gaming console executing a game, wherein aspects of the game executing on the gaming console are controlled based on the gaming control signals.

2. The method of claim 1, wherein the biological characteristic is a breathing characteristic of the user, wherein, optionally, the biometric sensor comprises a strain gauge.

3. The method of claim 1 or 2, wherein the biometric sensor unit comprises a cardiovascular monitoring device.

4. The method of claim 3, further comprising:
receiving, by the biometric sensor unit, signals from the cardiovascular monitoring device indicating a heart rate of the user wearing the biometric sensor unit, wherein, optionally, the method further comprises:
converting, by the biometric sensor unit, the signals from the cardiovascular monitoring device into gaming control signals corresponding to the heart rate of the user.

5. The method of any one of claims 1-4, wherein calibrating the biometric sensor further comprises:
receiving, by the biometric sensor unit, a first input during an inhale by the user and a second input during an exhale of the user.

6. The method of any one of claims 1-5, wherein the gaming control signals are correlated to joystick movements, and wherein the joystick movements are based on the calibration of the biometric sensor.

7. A wearable biometric sensor unit, comprising:
a housing;
a user input control;
an attachment structure;
a biometric sensor coupled to the attachment structure, the biometric sensor to generate signals based on a biological characteristic of a wearer of the biometric sensor unit;
a processing unit configured to:
receive the signals generated by the biometric sensor;
calibrate the biometric sensor by receiving user input from the user input control to set minimum and maximum threshold values for the biological characteristic detected by the biometric sensor;
convert in real-time the signals generated by the biometric sensor into gaming control signals corresponding to the biological characteristic of the user wearing the biometric sensor unit, and
wirelessly transmit the gaming control signals to a gaming console executing a game, wherein aspects of the game executing on the gaming console are controlled based on the gaming control signals.

8. The wearable biometric sensor unit of claim 7, wherein the biometric sensor comprises a strain gauge.

9. The wearable biometric sensor unit of claim 7 or 8, further comprising a rigid mounting block and a translating mounting block.

10. The wearable biometric sensor unit of claim 9, wherein a first end of the strain gauge is coupled to the rigid mounting block and a second end of the strain gauge is coupled to the translating mounting block, wherein, optionally, the attachment structure is coupled to the translating mounting block, and wherein the translating mounting block is translatable relative to the rigid mounting block.

11. The wearable biometric sensor unit of any one of claims 7-10, further comprising a cardiovascular monitoring device, wherein, optionally, the processing unit is further configured to:
receive signals from the cardiovascular monitoring device indicating a heart rate of the user wearing the biometric sensor unit; and
convert the signals from the cardiovascular monitoring device into gaming control signals corresponding to the heart rate of the user.

12. The wearable biometric sensor unit of any one of claims 7-11, wherein the gaming control signals are correlated to joystick movements based on the calibration of the biometric sensor.

13. A gaming system, comprising:
a gaming console executing a game;
a wearable biometric sensor unit in wireless communication with the gaming console, the wearable biometric sensor unit comprising:
a user input control;
a biometric sensor to generate signals based on a biological characteristic of a wearer of the biometric sensor unit;
a processing unit configured to:
receive the signals generated by the biometric sensor;
calibrate the biometric sensor by receiving user input from the user input control to set minimum and maximum threshold values for the biological characteristic detected by the biometric sensor;
convert the signals generated by the biometric sensor into gaming control signals corresponding to the biological characteristic of the user wearing the biometric sensor unit, and
wirelessly transmit the gaming control signals to the gaming console executing a game, wherein aspects of the game executing on the gaming console are controlled based on the gaming control signals.

14. The gaming system of claim 13, further comprising a virtual reality headset, wherein the game is a virtual reality game.

15. The gaming system of claim 13 or 14, wherein the gaming control signals are correlated to handset controller movements, wherein, optionally, the gaming control signals are based on breathing characteristics of the wearer of the biometric sensor unit.
